# EUROPEAN PATENT APPLICATION

(11) **EP 3 863 230 A1**
(43) Date of publication of application: **11.08.2021**
(21) Application number: 21154489.5
(22) Date of filing: 01.02.2021
(51) Int. Cl.: H04L 12/28, H04L 29/08

(54) **EVENT MANAGEMENT AND CONTROL DEVICE AND METHOD THEREOF**

(30) Priority: 05.02.2020 CN 202010080344
(71) Applicant: Hung, Yi-Pang, Taipei City (TW)
(72) Inventor: Hung, Yi-Pang, Taipei City (TW)
(74) Representative: Becker, Eberhard

(57) **Abstract**

An event management and control device (10) includes one event execution unit (11) and a main control unit (12). The main control unit (12) determines that a mobile device (20) has passed an authentication procedure, and generates and sends a home event message according to an identity information of the mobile device (20) that has passed the authentication procedure to the at least one event execution unit (11). Then, the event execution unit (11) executes corresponding functions according to the home event message, and different functions are executed with different identity information of the mobile device (20). In this way, when different users arrive home, the event management and control device (10) can perform different functions according to different users, so as to provide users with personalized event management and control methods, making it convenient for users to utilize.

## Description

### 1. Field of the Invention

The present invention relates to a management and control device and method, in particular to an event management and control device and a method thereof.

### 2. Description of the Prior Arts

Smart home appliances can connect with a mobile device to determine whether the user is home, and to perform corresponding functions. For example, smart lights can be automatically turned on when the user returns home.

A family usually has multiple members residing together. When different members arrive home, the smart home appliances may perform different functions according to the members who are at home. For example, as the son returns home, the smart appliances in the son's room can automatically turn on without turning on the smart appliances in the kitchen or the living room. In another example, as the father returns home, the smart radio in the living room can automatically turn on and play his favorite radio programs.

However, the conventional smart home appliances can only determine whether a user is home. When the user returns home, the smart home appliances can perform the corresponding function. But when there are many users, the conventional smart home appliances cannot perform different functions based on different users, which is inconvenient for the users. Therefore, the management and control methods of smart home appliances need to be improved.

To overcome the shortcomings, the present invention provides an event management and control device and an event management and control method to mitigate or obviate the aforementioned problems.

The event management and control device includes:
at least one event execution unit;
a main control unit, determining whether a mobile device has passed an authentication procedure, wherein
if the mobile device has passed the authentication procedure, the main control unit generates an authentication completion signal, generates a home event message according to an identity information of the mobile device that has passed the authentication procedure, and sends the home event message to the at least one event execution unit;
wherein when the at least one event execution unit receives the home event message, the at least one event execution unit determines whether to perform a home event according to the home event message; and
if the mobile device has not passed the authentication procedure, the main control unit generates an authentication failure signal, generates a leave event message according to an identity information of the mobile device that has not passed the authentication procedure, and sends a leave event message to the at least one event execution unit;
wherein when the at least one event execution unit receives the leave event message, the at least one event execution unit determines whether to perform a leave event according to the leave event message.

The event management and control method is executed by the main control unit of the event management and control device. The event management and control device further includes at least one event execution unit. The event management and control method includes the following steps of:
determining whether a mobile device has passed an authentication procedure;
if the mobile device has passed the authentication procedure, generating an authentication completion signal, generating a home event message according to an identity information of the mobile device that has passed the authentication procedure, and sending the home event message to the at least one event execution unit;
wherein when the home event message is received by the at least one event execution unit, the at least one event execution unit determines whether to perform a home event according to the home event message; and
if the mobile device has not passed the authentication procedure, generating an authentication failure signal, generating a leave event message according to an identity information of the mobile device that has not passed the authentication procedure, and sending a leave event message to the at least one event execution unit.

The event management and control method of the present invention is executed by a main control unit of the event management and control device. When the main control unit determines that the mobile device has passed the authentication procedure, the main control unit generates and sends the home event message and the leave event message so that the at least one event execution unit executes corresponding functions according to the home event message and the leave event message.

Since the at least one event execution unit executes corresponding functions according to the home event message and the leave event message, different functions will be executed if the home event message and the leave event message are different. Therefore, when different users return home, the at least one event execution unit can perform different functions, thereby providing users with personalized event management and control methods to utilize.

Other objectives, advantages and novel features of the invention will become more apparent from the following detailed description when taken in conjunction with the accompanying drawings.

### IN THE DRAWINGS

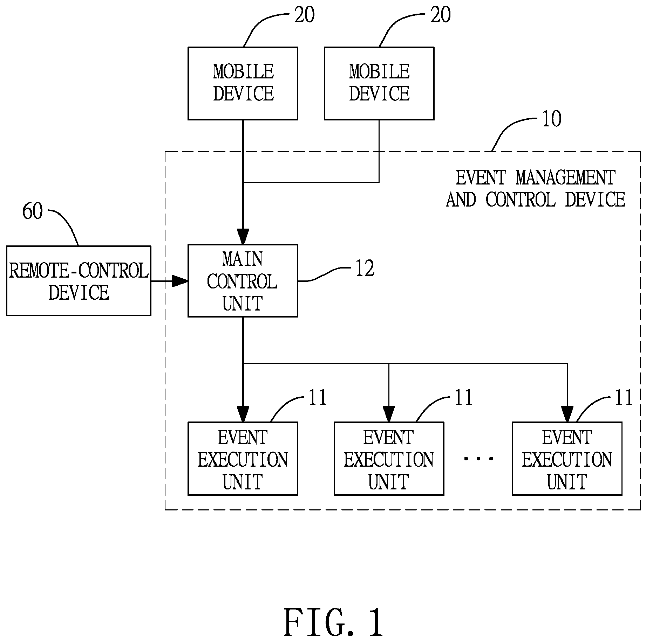

FIG. 1 is a block diagram of a preferred embodiment of the event management and control device of the present invention.
FIG. 2 is a schematic flowchart of a first preferred embodiment of the event management and control method of the present invention.
FIG. 3 is a schematic diagram of a first operational state of the event management and control method of the present invention.
FIG. 4 is a schematic diagram of a second operational state of the event management and control method of the present invention.
FIG. 5 is a schematic flowchart of a second preferred embodiment of the event management and control method of the present invention.
FIG. 6 is a schematic flowchart of a third preferred embodiment of the event management and control method of the present invention.
FIG. 7 is a schematic flowchart of a fourth preferred embodiment of the event management and control method of the present invention.
FIG. 8 is a schematic diagram of a third operational state of the event management and control method of the present invention.
FIG. 9 is a schematic flowchart of a fifth preferred embodiment of the event management and control method of the present invention.
FIG. 10 is a schematic flowchart of a sixth preferred embodiment of the event management and control method of the present invention.
FIG. 11 is a schematic flowchart of a seventh preferred embodiment of the event management and control method of the present invention.
FIG. 12 is a schematic diagram of a fourth operational state of the event management and control method of the present invention.
FIG. 13 is a schematic diagram of a fifth operational state of the event management and control method of the present invention.
Referring to FIG. 1, the present invention provides an event management and control method and an event management and control device. The event management and control device 10 includes at least one event execution unit 11 and a main control unit 12. The main control unit 12 determines whether a mobile device 20 has passed an authentication procedure.

If the main control unit 12 determines that the mobile device 20 has passed the authentication procedure, the main control unit 12 generates an authentication completion signal, generates a home event message according to an identity information of the mobile device that has passed the authentication procedure, and sends the home event message to the at least one event execution unit 11. When the home event message is received by the at least one event execution unit 11, the at least one event execution unit determines whether to perform a home event according to the home event message.

It is noted that the home event message generated according to the identity information of the mobile device 20 that has passed the authentication procedure can carry a package including the identity information. Therefore, when the at least one event execution unit 11 receives the home event message, the at least one event execution unit 11 can determine whether to perform the home event according to the home event message. The detail is well known prior art in the communication field and is therefore not introduced here.

If the main control unit 12 determines that the mobile device 20 has not passed the authentication procedure, the main control unit 12 generates an authentication failure signal, generates a leave event message according to an identity information of the mobile device 20 that has not passed the authentication procedure, and sends the leave event message to the at least one event execution unit 11, and the at least one event execution unit 11 determines whether to perform a leave event according to the leave event message.

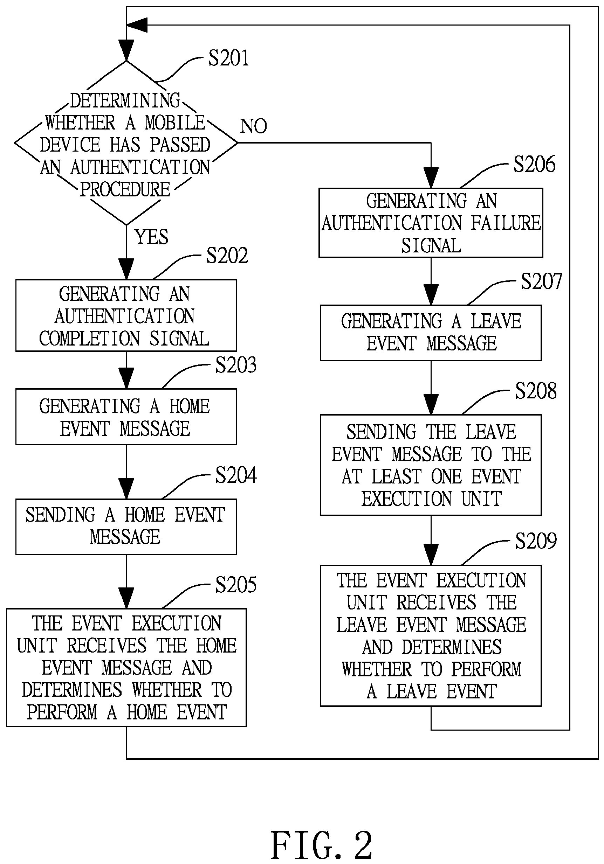

Referring to FIG. 2 further, the event management and control method is executed by the main control unit 12 of the event management and control device 10. The event management and control device 10 further includes the at least one event execution unit 11. The event management and control method includes the following steps of:
determining whether a mobile device has passed an authentication procedure (S201);
if the mobile device has passed the authentication procedure, generating an authentication completion signal (S202);
   generating a home event message according to an identity information of the mobile device that has passed the authentication procedure (S203);
   sending a home event message to the at least one event execution unit (S204);
   wherein when the at least one event execution unit receives the home event message, the at least one event execution unit determines whether to perform a home event according to the home event message (S205);
if the mobile device has not passed the authentication procedure, generating an authentication failure signal (S206);
   generating a leave event message according to an identity information of the mobile device that has not passed the authentication procedure (S207);
   sending the leave event message to the at least one event execution unit (S208);
   wherein when the at least one event execution unit receives the leave event message, the at least one event execution unit determines whether to perform a leave event according to the leave event message (S209).

When the main control unit 12 determines that the mobile device 20 has passed the authentication procedure, the main control unit 12 generates the home event message and sends the home event message to the at least one event execution unit 11. When the at least one event execution unit 11 receives the home event message, the at least one event execution unit 11 determines whether to execute corresponding functions according to the home event message.

Since the at least one event execution unit 11 executes corresponding functions according to the home event message and the leave event message, different functions will be executed when the home event message and the leave event message are different. Therefore, when different users return home, the at least one event execution unit 11 can perform different functions, thereby providing users with personalized event management and control methods conveniently.

In other words, the event management and control device 10 can determine whether a specific person has left home or arrived home based on the authentication completion signal and the authentication failure signal, and perform specific actions based on the event.

In a preferred embodiment, the main control unit 12 and the mobile device 20 are connected via Bluetooth communication to determine whether the mobile device 20 has passed the authentication procedure.

Furthermore, the number of simultaneous connections via Bluetooth communication is limited, so the main control unit 12 cannot connect to too many mobile devices 20 at the same time. In order to facilitate the expansion of the number of connections, the main control unit 12 may include a processing module and a plurality of authentication modules connected to the processing module. The processing module executes the above steps, and the authentication modules are connected to a plurality of mobile devices 20 respectively. These authentication modules can be connected to the processing module in other expandable ways, such as a universal serial bus (USB) hub. Then, the authentication module and the processing module may not be integrated in one device.

Taking an embodiment as an example, one or more external Bluetooth devices can be the authentication modules, and a general smart phone having an application program (APP) installed therein can be the processing module. When the external Bluetooth device successfully authenticates the mobile device 20, the external Bluetooth device sends an authentication success event to the APP of the smart phone. When the external Bluetooth device fails to authenticate the mobile device 20, the external Bluetooth device sends an authentication failure event to the APP of the smart phone. When receiving the authentication success event or the authentication failure event generated by the external Bluetooth device as the authentication module, the smart phone as the processing module correspondingly generates a home event message or a leave event message and sends the home event message or the leave event message to the at least one event execution unit 11.

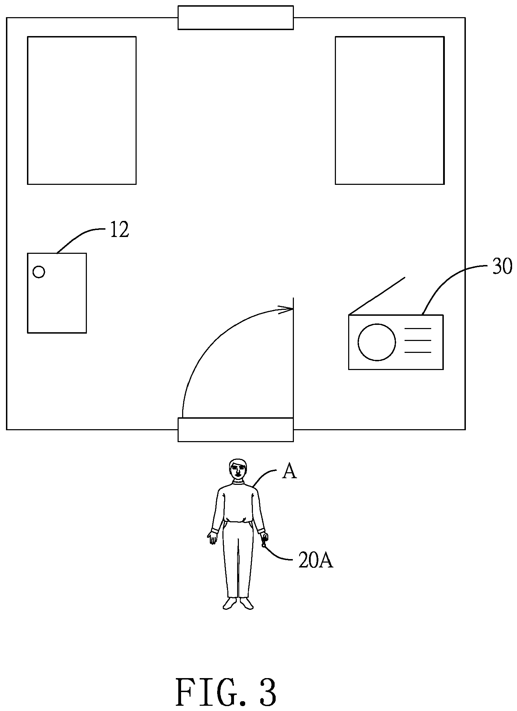

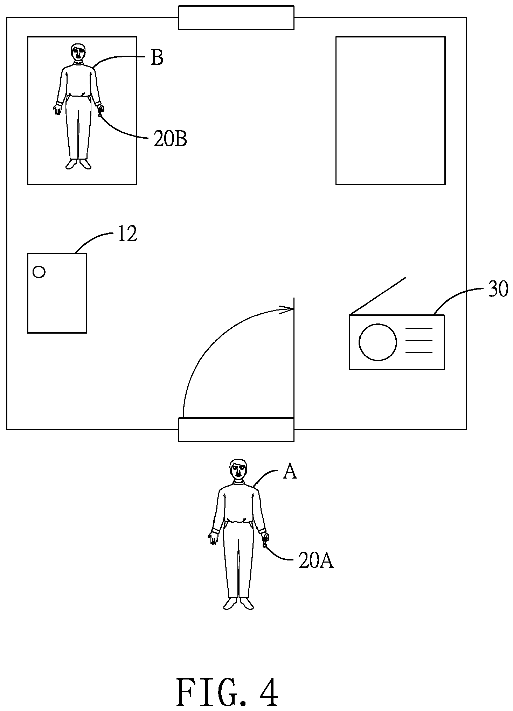

For example, referring to FIG.3 and FIG.4, a family has two users, a user A and a user B. The user A carries a mobile device 20A. The user B carries a mobile device 20B. The event management and control device 10 includes the main control unit 12 and the at least one event execution unit 11. In an embodiment, the main control unit 12 of the event management and control device 10 is a smart phone. One application program is installed in the smart phone, which includes a software module as the main control unit 12. The application program also generates and sends the home event message or the leave event message to the at least one event execution unit 11 to perform corresponding functions, such as controlling the radio 30. For example, the at least one event execution unit 11 can be a software module of the application program, which communicates with and controls other smart home appliances. For another example, the at least one event execution unit 11 is an infrared emitting unit and is connected to the main control unit 12 by wire or wirelessly. Then, the main control unit 12 can generate and send the message to the at least one event execution unit 11. After the at least one event execution unit 11 receives the message, the corresponding event execution unit 11 performs corresponding functions according to the message. For instance, the event execution unit 11 generates infrared control signal through the application to control appliances that can receive infrared remote control signals. Therefore, the present invention can use an old smart phone previously replaced as the main control unit 12 of the event management and control device 10. In this way, the cost of the event management and control device 10 of the present invention is relatively low, which can save costs for users.

For example, the user A hopes that the radio can be turned on and switched to a preset channel when he comes home, and the radio can be turned off when he leaves home.

Before the event management and control device 10 starts execution, the mobile device 20 must register user information with the event management and control device 10. Each mobile device 20 corresponds to a respective user. Therefore, when the user A arrives home, the authentication unit of the event management and control device 10 will authenticate the mobile device 20A. When the mobile device 20A is authenticated, it means that the user A has returned home. At this time, a home event message corresponding to the user A is generated and sent to the at least one event execution unit 11. When the at least one event execution unit 11 receives the home event message, the corresponding event execution unit 11 will execute corresponding functions according to the home event message corresponding to the user A. For example, the radio can be turned on and tuned in to the user A's settings channel. When the user A leaves, the authentication failure signal corresponding to user A is generated and the leave event message of the user A is generated and sent to the at least one event execution unit 11. When the at least one event execution unit 11 receives the leave event message, the corresponding event execution unit 11 performs corresponding functions, such as turning off the radio 30 to save power.

Furthermore, the present invention can also be an access record system to record all users' arrival time and leaving time. When the user A returns home and the mobile device 20A passes the authentication process, the authentication completion signal A is generated, and the home event message corresponding to the user A is generated and sent to the at least one event execution unit 11 to record the user A's arrival time. When the user A leaves home, an authentication failure event A is generated, and the leave event message corresponding to the user A is generated and sent to the at least one event processing unit 11 to record the user A's leaving time. In this way, the user A's access records can be obtained without manual recording, which can save time.

In addition, in the above embodiment, the leave event or the home event corresponding to each user are generated independently, that is to say, whether the user B is at home does not affect the access of the user A's events. But in some cases, other users' state needs to be considered before deciding how to execute.

For example, in the aforementioned home event, the user A returns home and wants to turn on the radio to play the preset broadcast channel. However, if the user B is resting at home, the user B will be disturbed when the radio is turned on upon the user A's arrival at home. At this time, whether the user B is at home should be considered. So, if the user B is at home, the radio will not be turned on to avoid disturbing the user B.

In another example, the user A and the user B are both at home. When the user A is leaving, the event management and control device 10 turns off the radio due to the leave event of the user A. But the user B is still listening to the radio. At this time, turning off the radio will bother the user B. So whether the user B is at home should be considered before deciding whether to turn off the radio.

Therefore, the main control unit 12 also has a home state record table, which records a user state corresponding to the identity information of the mobile device 20.

When the main control unit 12 generates the home event message, it updates the user state corresponding to the identity information of the mobile device 20 that has passed the authentication procedure recorded in the home state record table to a home state. After that, the main control unit 12 sends the home event message to the at least one event execution unit 11. After the at least one event execution unit 11 receives the home event message, the corresponding event execution unit 11 will execute corresponding functions according to the home event message and the user state recorded in the home state record table.

When the main control unit 12 generates the leave event message, the main control unit 12 updates the user state corresponding to the identity information of the mobile device 20 that has not passed the authentication procedure recorded in the home state record table to a leave state. After that, the main control unit 12 sends the leave event message to the at least one event execution unit 11. After the at least one event execution unit 11 receives the leave event message, the corresponding event execution unit 11 will execute corresponding functions according to the leave event message and the user state recorded in the home state record table.

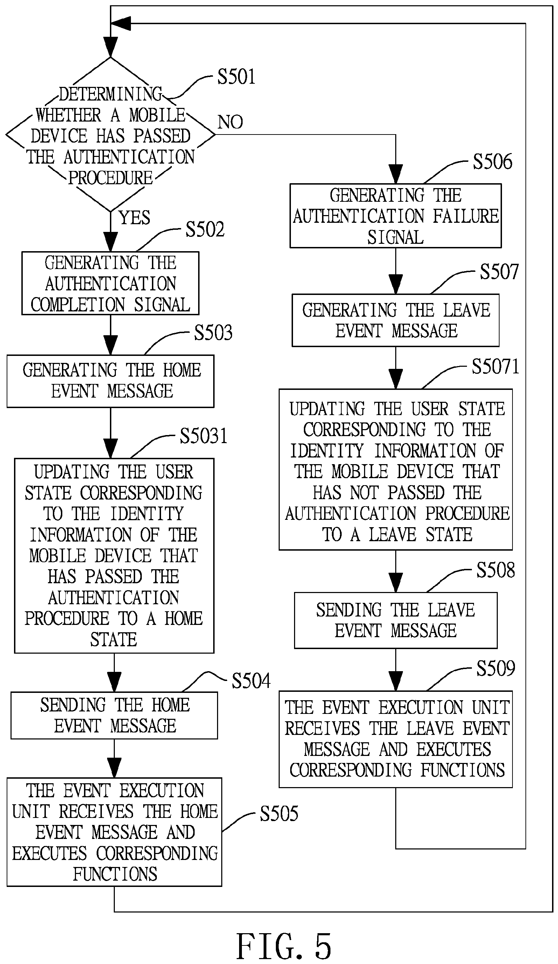

As shown in FIG. 5, the event management and control method also includes the following steps of:
determining whether a mobile device has passed an authentication procedure (S501);
if yes, generating the authentication completion signal (S502);
generating the home event message (S503);
updating the user state corresponding to the identity information of the mobile device that has passed the authentication procedure to a home state (S5031);
sending the home event message to the at least one event execution unit (S504);
wherein when the at least one event execution unit receives the home event message, the at least one event execution unit executes corresponding functions according to the home event message and the user state recorded in the home state record table (S505);
if not, generating the authentication failure signal (S506);
generating the leave event message (S507);
updating the user state corresponding to the identity information of the mobile device that has not passed the authentication procedure to a leave state (S5071);
sending the leave event message to the at least one event execution unit (S508);
wherein when the at least one event execution unit receives the leave event message, the at least one event execution unit executes corresponding functions according to the leave event message and the user state recorded in the home state record table (S509).

The event management and control device 10 also has the home state record table, which records the user state of each user. After the event management and control device 10 is activated, the event management and control device 10 will first build the home state record table, in which each field represents a user. When the home event message is generated, the corresponding field can be updated to the home state. After that, the main control unit 12 sends the home event message to the at least one event execution unit 11. When the user's leave event message is generated, the corresponding field can be updated to the leave state. After that, the main control unit 12 sends the leave event message to the at least one event execution unit 11. In this way, it can be known whether the user is currently at home through the home state record table.

**home state record table 1**

| User identity | User state |
|---|---|
| User A | Home state |
| User B | Home state |

For example, as shown in the home state record table 1, when the main control unit 12 generates the user A's home event message, it represents that the user A returns home. The main control unit 12 first updates the user A's state in the home state record table as the home state and confirms other users' state in the home state record table. After that, the main control unit 12 sends the home event message to the corresponding event execution unit 11. When the user B's state is also the home state, it means that the user B is also at home, so the action of turning on the radio 30 is cancelled by the corresponding event execution unit 11, or the radio 30 is still turned on by the corresponding event execution unit 11, but the sound is adjusted to a low voice so as not to disturb the user B.

**home state record table 2**

| User identity | User state |
|---|---|
| User A | Leave state |
| User B | Home state |

In another example, as shown in the home state record table 2, when the main control unit 12 generates the user A's leave event message, it represents that the user A has left home. The main control unit 12 updates the user A's state in the home state record table as the leave state. After that, the main control unit 12 sends the leave event message to the at least one event execution unit 11. Although the user A leaves home, it is necessary to confirm that the user B is still at home through the home state record table. If the light in the house is turned off at this time, it will bother the user B. Therefore, after the at least one event execution unit 11 receives the leave event message, the at least one event execution unit 11 reads the home state record table to determine that the user B is at home, and the corresponding event execution unit 11 cancels the original action, such as turning off the light. In another example, the at least one event execution unit 11 first reads the home state record table and determines that the user B is at home, and the corresponding event execution unit 11 cancels the original action, such as turning off the light.

The users have a variety of needs, and the execution method of the main control unit can be set by the users to meet their needs.

Furthermore, in a preferred embodiment, before the authentication procedure, the mobile device 20 may register with the event management and control device 10, so as to register the identity information of the mobile device 20 in the event management and control device. In this way, when the authentication procedure is executed, the mobile device 20 is determined whether to pass the authentication procedure according to whether the mobile device 20 has been registered.

When the event management and control device 10 executes a registration procedure for the mobile device 20, the event management and control device 10 will get the identity information of each mobile device 20, which is used as the comparison data for the authentication procedure. Since each mobile device 20 is carried by a specific user, the event management device 10 confirms that one of the mobile devices 20 has passed the authentication process and generates the authentication completion signal, which represents the user of the mobile device 20 is nearby. When the user leaves, the event management device 10 cannot execute the authentication procedure on the mobile device 20, so that the mobile device 20 cannot pass the authentication procedure, and the authentication failure signal is generated.

Therefore, when the main control unit 12 determines whether the mobile device 20 has passed the authentication procedure, the main control unit 12 can determine whether it is successfully connected with the registered mobile device 20.

When the main control unit 12 successfully connects with the registered mobile device 20, the main control unit 12 generates the authentication completion signal, generates the home event message, and updates the user state corresponding to the identity information of the successfully connected mobile device 20 recorded in the home state record table to the home state. After that, the main control unit 12 sends the home event message to the at least one event execution unit 11. After the at least one event execution unit 11 receives the home event message, the corresponding event execution unit 11 executes corresponding functions according to the home event message and the user state recorded in the home state record table.

When the connection with the registered mobile device is not successful, the main control unit 12 further determines whether the connection is lost with the mobile device that has been successfully connected.

When the connection is lost with the mobile device that has been successfully connected, the main control unit 12 generates the authentication failure signal, generates the leave event message, updates the user state corresponding to the identity information of the mobile device that has lost the connection in the home state record table to the leave state. After that, the main control unit 12 sends the leave event message to the at least one event execution unit 11. After the at least one event execution unit 11 receives the leave event message, the corresponding event execution unit 11 executes corresponding functions according to the leave event message and the user state recorded in the home state record table.

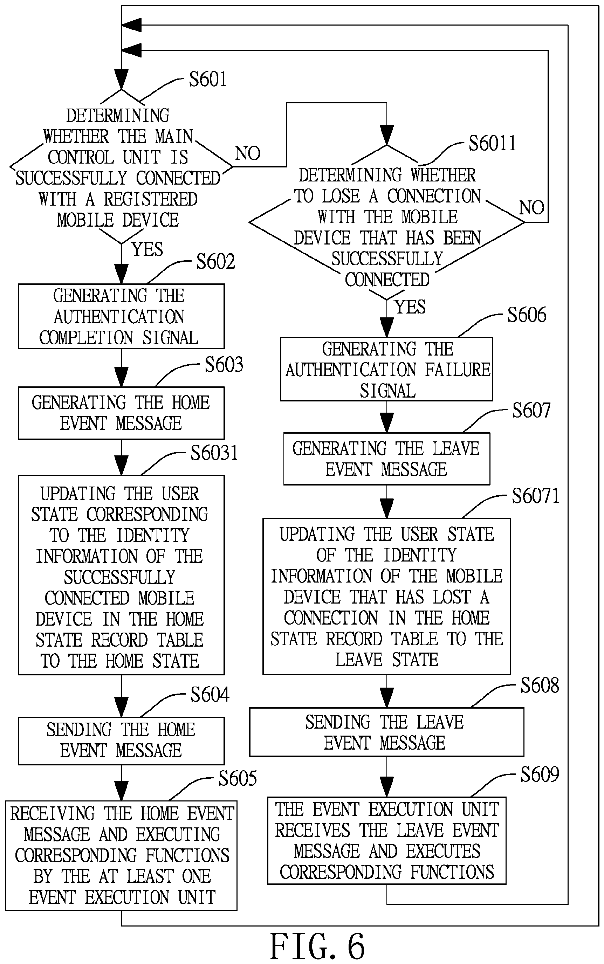

Referring to FIG. 6, in the embodiment, the event management and control method further includes the following sub-steps when performing the step of determining whether the mobile device has passed the authentication procedure:
determining whether the main control unit is successfully connected with a registered mobile device (S601);
when successfully connected with the registered mobile device, generating the authentication completion signal (S602), generating the home event message (S603), updating the user state corresponding to the identity information of the successfully connected mobile device in the home state record table to the home state (S6031), and sending the home event message to the at least one event execution unit (S604), wherein when the at least one event execution unit receives the home event message, the at least one event execution unit executes corresponding functions according to the home event message and the user state recorded in the home state record table (S605);
when not successfully connected with the registered mobile device, determining whether to lose a connection with the mobile device that has been successfully connected (S6011); and
when losing the connection with the mobile device that has been successfully connected, generating an authentication failure signal (S606), generating the leave event message (S607), updating the user state of the identity information of the mobile device that has lost a connection in the home state record table to the leave state (S6071), and sending the leave event message to the at least one event execution unit (S608), wherein when the at least one event execution unit receives the leave event message, the at least one event execution unit executes corresponding functions according to the leave event message and the user state recorded in the home state record table (S609).

In another embodiment, the authentication procedure is a scanning authentication procedure. When the main control unit 12 determines whether the mobile device 20 has passed the authentication procedure, the main control unit 12 first determines whether a signal sent by the mobile device 20 is scanned.

When scanning the signal sent by the mobile device 20, the main control unit 12 further determines whether the identity information in the signal has been registered, and when determining that the identity information in the signal has been registered, the main control unit 12 determines whether the user state corresponding to the identity information in the signal in the home state record table is the home state.

When determining the user state corresponding to the identity information in the signal in the home state record table is the home state, the main control unit 12 further updates a record time corresponding to the identity information in the signal in the home state record table to a current time.

When determining the user state corresponding to the identity information in the signal in the home state record table is not the home state, the main control unit 12 generates the authentication completion signal, generates the home event message, updates a record time corresponding to the identity information in the signal in the home state record table to a current time, updates the user state corresponding to the identity information in the signal in the home state record table to the home state, and sends the home event message to the at least one event execution unit 11, wherein when the at least one event execution unit 11 receives the home event message, the corresponding event execution unit 11 executes corresponding functions according to the home event message and the user state recorded in the home state record table.

When the main control unit 12 does not scan the signal sent by the mobile device, the main control unit 12 further determines whether a time difference between the recording time corresponding to the identity information in the home state record table and the current time exceeds a preset value.

When the time difference between the record time corresponding to the identity information in the home state record table and the current time exceeds the preset value, the main control unit 12 generates the authentication failure signal and generates the leave event message, updates the user state corresponding to the identity information to the leave state, and sends the leave event message to the at least one event execution unit 11, wherein when the at least one event execution unit 11 receives the leave event message, the corresponding event execution unit 11 executes corresponding functions according to the leave event message and the user state recorded in the home state record table.

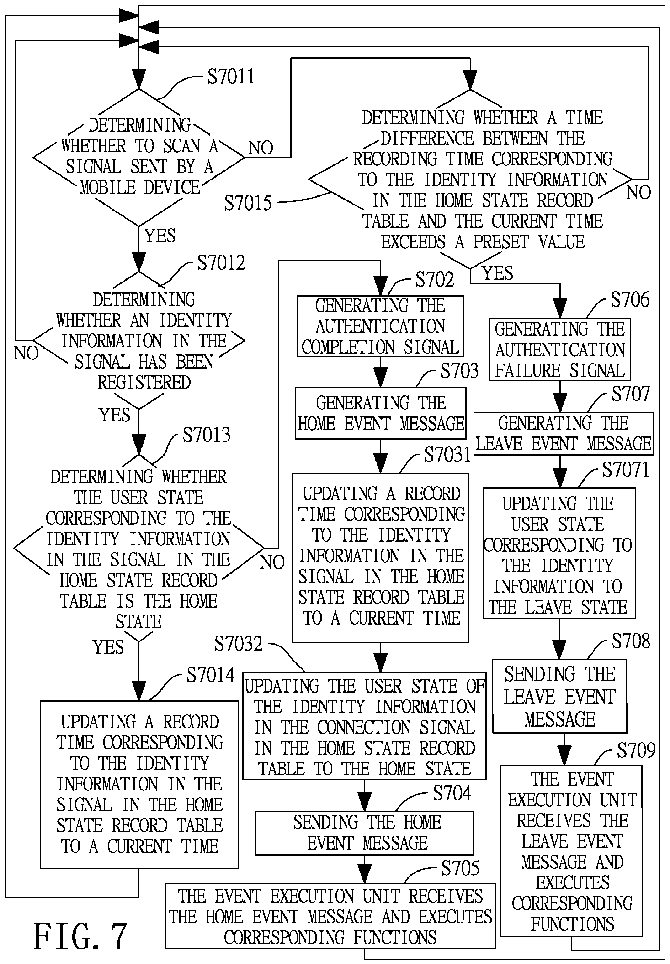

Referring to FIG. 7, in a preferred embodiment, the event management and control method further includes the following sub-steps when performing the step of determining whether the mobile device has passed the authentication procedure:
determining whether to scan a signal sent by a mobile device (S7011);
when scanning the signal, determining whether an identity information in the signal has been registered (S7012);
when the identity information in the signal has been registered, determining whether the user state corresponding to the identity information in the signal in the home state record table is the home state (S7013);
when the user state corresponding to the identity information in the signal in the home state record table is the home state, updating a record time corresponding to the identity information in the signal in the home state record table to a current time (S7014);
when the user state corresponding to the identity information in the signal in the home state record table is not the home state, generating an authentication completion signal (S702), generating the home event message (S703), updating the record time corresponding to the identity information in the signal in the home state record table to the current time (S7031), updating the user state of the identity information in the signal in the home state record table to the home state (S7032), and sending the home event message to the at least one event execution unit (S704), wherein when the at least one event execution unit receives the home event message, the corresponding event execution unit executes corresponding functions according to the home event message and the user state in the home state record table (S705);
when the signal sent by the mobile device is not scanned, determining whether a time difference between the recording time corresponding to the identity information in the home state record table and the current time exceeds a preset value (S7015);
when the time difference between the record time corresponding to the identity information in the home state record table and the current time exceeds the preset value, generating an authentication failure signal (S706), generating the leave event message (S707), updating the user state corresponding to the identity information to the leave state (S7071), and sending the leave event message to the at least one event execution unit (S708), wherein when the at least one event execution unit receives the leave event message, the corresponding event execution unit 11 executes corresponding functions according to the leave event message and the user state recorded in the home state record table (S709).

In addition, in another embodiment, when the main control unit 12 generates the home event message or the leave event message to the at least one event execution unit 11, the at least one event execution unit 11 can further refer to the current environmental state. For example, the user may want to listen to different channels at different times. Then, when the user returns home, the at least one event execution unit 11 can refer to the current time to decide the channel.

When the home event message is sent by the main control unit 12, the at least one event execution unit 11 receives an environmental parameter information, and then the corresponding event execution unit 11 executes corresponding functions according to the home event message and the environmental parameter information. When the leave event message is sent by the main control unit 12, the at least one event execution unit 11 receives an environmental parameter information, and then the corresponding event execution unit 11 executes corresponding functions according to the leave event message and the environmental parameter information.

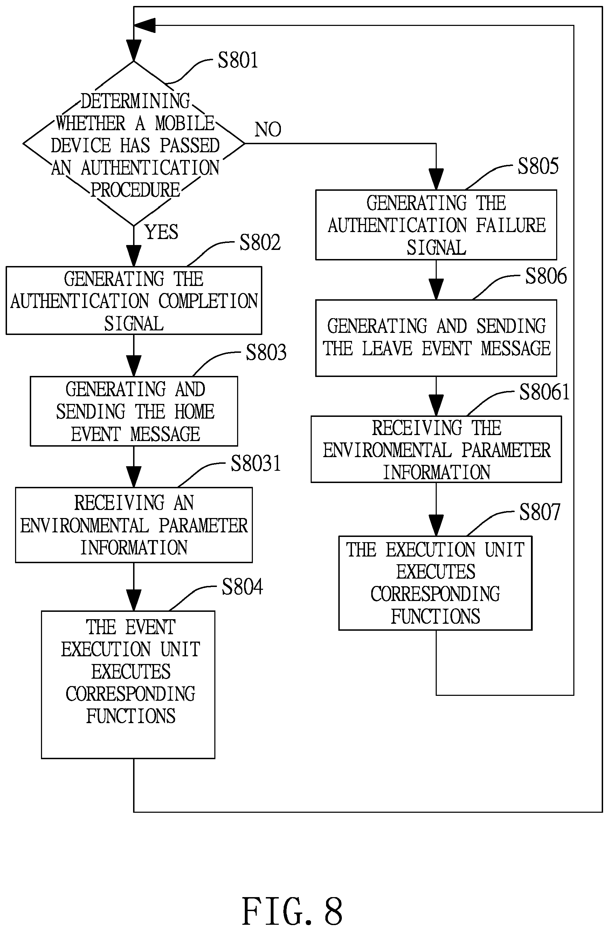

Referring to FIG. 8, in the embodiment, the event management and control method further includes the following steps of:
determining whether a mobile device has passed an authentication procedure (S801);
if yes, generating an authentication completion signal (S802);
generating and sending the home event message (S803);
when the home event message is sent, the at least one event execution unit 11 receiving an environmental parameter information (S8031), and then the corresponding event execution unit 11 executing corresponding functions according to the home event message and the environmental parameter information (S804);
if not, generating an authentication failure signal (S805);
generating and sending the leave event message (S806);
when the leave event is sent, the at least one event execution unit 11 receives an environmental parameter information (S8061), and then the corresponding execution unit 11 executes corresponding functions according to the leave event message and the environmental parameter information (S807).

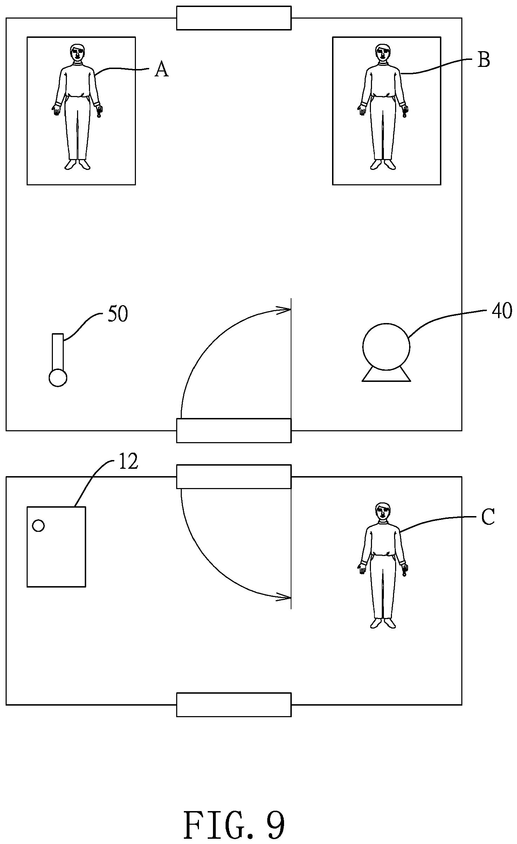

Referring to FIG. 9, for example, there are three members, i.e., a user A, a user B, and a user C living in the household. The user A and the user B share a room, but the user C does not share the same room with the user A and the user B. The user A wants to turn on the electric fan 40 in the room shared by the user A and the user B when the temperature is higher than a preset temperature. Therefore, a thermometer 50 is mounted in the room of the user A and the user B, and the at least one event execution unit 11 further receives the temperature signal sent from the thermometer 50.

If the corresponding event execution unit 11 finds that the user A is at home and the current temperature exceeds the preset temperature according to the temperature signal and the home state record table, the electric fan 40 can be turned on by the corresponding event execution unit 11.

In addition, in other embodiments, when the at least one event execution unit 11 receives the environmental parameter information, the at least one event execution unit 11 may determine whether an environmental parameter event message is generated according to the environmental parameter information.

When the environmental parameter event message is generated by the at least one event execution unit 11 according to the environmental parameter information, the corresponding event execution unit 11 reads the home state record table and executes corresponding functions according to the user state recorded in the home state record table and the environmental parameter information event message. In another embodiment, the at least one event execution unit 11 reads the home state record table, and receives the home event message or the leave event message, and the corresponding event execution unit 11 executes corresponding functions according to the user state recorded in the home state record table and the environmental parameter information.

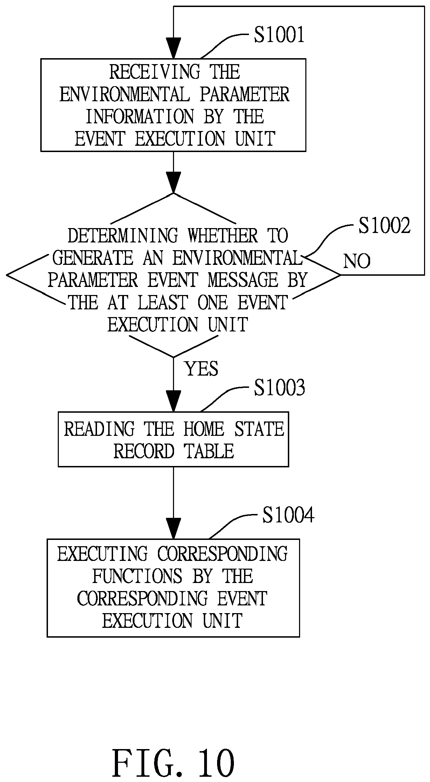

Referring to FIG. 10, the event management and control method further includes the following steps of:
when receiving the environmental parameter information by the at least one event execution unit 11 (S1001), determining whether to generate an environmental parameter event message by the at least one event execution unit 11 according to the environmental parameter information (S1002); and
when generating the environmental parameter event message, reading the home state record table (S 1003) and executing corresponding functions by the corresponding event execution unit 11 according to the user state recorded in the home state record table and the environmental parameter information (S 1004).

For example, if the user A is not at home, it would be wasteful to turn on the electric fan 40. Therefore, when the at least one event execution unit 11 generates the environmental parameter event message according to the environmental parameter information, the at least one event execution unit 11 should first read the home state record table and determine how to execute corresponding functions according to the user state recorded in the home state record table and the environmental event message.

For example, the at least one event execution unit 11 may read the value of the thermometer 50 in the room every ten minutes, and determines whether to generate the environmental parameter event message according to the environmental parameter information, or when the temperature changes, the thermometer 50 generates environmental parameter information and sends it to the corresponding event execution unit 11. If the corresponding event execution unit 11 determines that the temperature is higher than the preset temperature, it will read the home state record table. If the user A is at home, the corresponding event execution unit 11 controls to turn on the electric fan 40, and if the user A is not there, the corresponding event execution unit 11 will not execute any action.

As in the previous example, the electric fan 40 is mounted in the room of the user A and the user B. Then when the user C is at home, the electric fan 40 will not be turned on for the user C since the user C does not enter the room of the user A and the user B. When both the user A and the user B are in the room, the temperature in the room rises faster, so the corresponding event execution unit 11 may control the electric fan 40 to turn faster. When the user A is afraid of heat, the preset temperature may be set to a lower temperature, or when the user B is not so afraid of heat, the preset temperature may be set to a higher temperature. In this way, the present invention can be customized according to different users to meet their needs.

In other situations, for example, the user A sets an automatic robot vacuum to work during his work time, so that the robot vacuum will not disturb the user's life at home. But if one day the user A stays at home for some reason during his normal work time, when the corresponding event execution unit 11 determines the robot vacuum should be started according to the environmental parameter information, such as the time information, the main control unit 12 will read the home state record table before starting the robot vacuum. In another embodiment, the at least one event execution unit 11 will read the home state record table before starting the robot vacuum. So the corresponding event execution unit 11 determines that the user A is at home, and then cancels the action to start the robot vacuum to avoid disturbing the user A or does not start the robot vacuum until the user A leaves. In the above example, the event execution unit 11 may be a software module of a mobile phone for controlling the robot vacuum.

Since users have various different needs and different considerations, the execution method can be set by the users, or can be set according to different electrical appliances to meet the users' environment.

In addition, remote control is another common function. Users can remotely control home appliances through the network. However, when the users remotely control the home appliances through the network and someone at home happens to be using this appliance this will cause inconvenience to the users.

Therefore, when the main control unit 12 receives a remote control signal generated by a remote control device, the main control unit 12 generates a remote event message according to the remote control signal and sends the remote event message to the at least one event execution unit 11. When the at least one event execution unit 11 receives the remote event message, the corresponding event execution unit 11 reads the home state record table, and executes corresponding functions according to the user state recorded in the home state record table and the remote event message.

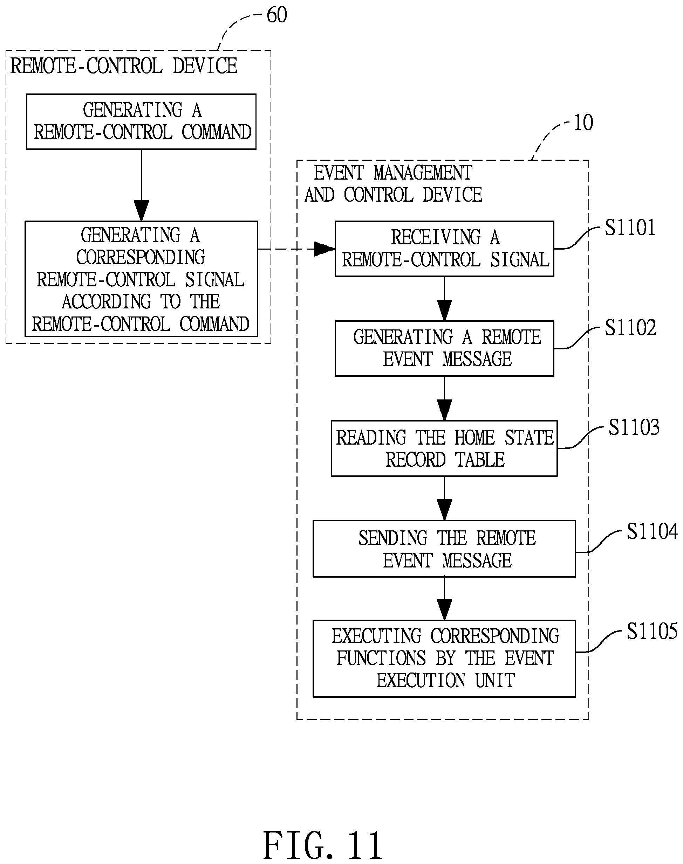

Referring to FIG. 11, the event management and control method further includes the following steps of:
when receiving a remote-control signal by the main control unit (S1101), generating a remote event message by the main control unit according to the remote control signal (S 1102), reading the home state record table (S1103), and sending the remote event message to the at least one event execution unit (S 1104), wherein when the at least one event execution unit receives the remote event message, the corresponding event execution unit executes corresponding functions according to the remote event message and the user state recorded in the home state record table (S1105).

For example, when the main control unit 12 sends the remote-control event message to the at least one event execution unit 11, the corresponding execution unit 11 can first determine if any one is in the house, and then decide what to do next. In another way, a remote-control device used by the user to send the remote-control signal reads the state of the people at home before sending the remote-control signal, and then decides what to do next.

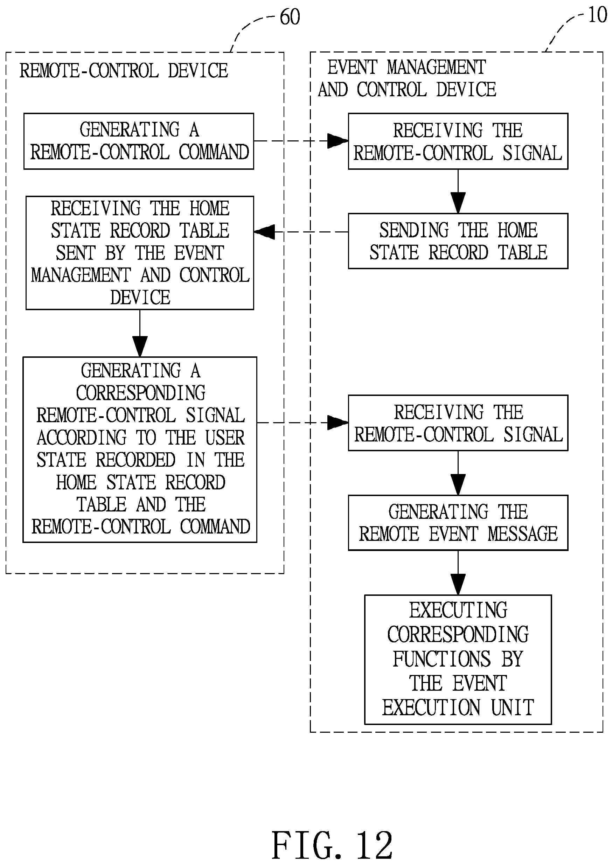

Referring to FIG. 12, when the user uses the remote-control function, the user operates the remote-control device 60 to generate a remote-control command. The main control unit 12 of the event management and control device 10 receives the remote-control command, then sends the home state record table to the remote-control device 60. The remote-control device 60 generates a corresponding remote-control signal according to the received home state record table, and sends the remote-control signal to the main control unit 12 of the event management device 10. In this situation, the remote-control signal received by the main control unit 12 is generated by the remote-control device 60 according to the received home state record table, it represents that the remote-control signal contains the information of whether the user is at home or not. Therefore, the main control unit 12 generates the remote event message according to the remote control signal. After that, the main control unit 12 sends the remote event message to the at least one event execution unit 11, and when the at least one event execution unit 11 receives the remote event message, the corresponding event execution unit 11 executes corresponding functions according to the remote event message.

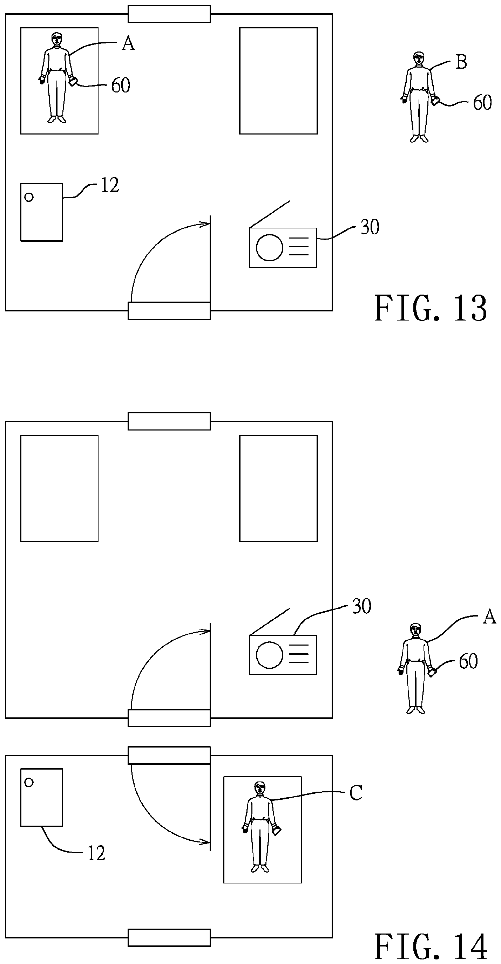

Referring to FIG. 13, for example, the user A is at home but the user B is not at home. The user B's smart phone is a remote-control device 60. The user B wants to control the radio at home to record a playing channel from outside. At this time, the user B operates the remote-control device to remotely control the radio 30. When the main control unit 12 receives the remote-control signal, it first reads the home state record table and knows that user A is at home. Then the main control unit 12 generates the remote-control event message according to the remote-control signal and sends the remote-control event message to the at least one event execution unit 11. The at least one event execution unit 11 receives the remote-control event message and the corresponding event execution unit 11 does not turn on the radio 30 to avoid disturbing the user A. When the main control unit 12 confirms the user A is at home, it sends a confirmation event to the remote-control device of the user B to inform the user B that the user A is at home at this time, and to ask the user B for confirmation again before turning on the radio 30.

In another situation, the user A is at home, and the user B wants to remotely control the radio 30 and operates the command from the remote-control device 60 in the user B's hand. The remote-control device 60 of the user B first transmits the command of the user B to the main control unit 12, and the main control unit 12 receives the home state record table. At this time, the remote-control device 60 of the user B first receives the home state record table, knows that user A is at home from the home state record table, then displays a message that user A is at home and the command cannot be executed.

The main control unit 12 reminds the user B that the user A is currently at home, and asks the user B to reconfirm. After the user B reconfirms, the remote-control device 60 of the user B sends the remote-control signal to the main control unit 12 and executes the command.

At this time, the radio is playing exactly the channel that the user B wants to record. Then the recording will not disturb the user A, so the recording can be directly performed without notifying the user B.

However, in other situations, the remote-control signal may be sent from the user A. For example, the user A is playing on the smart phone in bed, but the radio 30 is at the other end of the room, and the user A turns off the radio 30 through the remote-control device 60 nearby. At this time, if the user A is reminded according to the above process, the user A will be disturbed.

Therefore, in this situation, the remote-control signal can contain the sender's information. For example, when the remote-control device 60 of the user A sends the remote-control signal to the main control unit 12, the main control unit 12 reads the home state record table and determines that the remote-control signal is sent by the user A and the user A is at home. In this case, there is no need to remind the user A to confirm again, but the radio 30 is directly turned off.

In another situation, after the remote control device 60 is operated by the user A to generate the remote control command, it first receives the home state record table returned by the main control unit 12 and confirms that the user A, who sends the remote control signal, is at home according to the home state record table. There is no need to remind the user A to confirm again, but the radio 30 is directly turned off.

Furthermore, as shown in FIG. 14, there are three members, i.e., user A, user B, and user C at home. When only the user C is at home, the user A wants to remotely control the radio 30. Although the user C is at home at this time, the user C does not use the radio 30 and is not in the same room with the radio 30. Therefore, even if the remote-control device 60 or the main control device 12 knows that the user C is at home, the remote-control command of the user A can still be executed directly.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. An event management and control device (10), **characterized in that** the event management and control device (10) comprises:
at least one event execution unit; and
a main control unit (12), determining whether a mobile device (20) has passed an authentication procedure, wherein
if the mobile device (20) has passed the authentication procedure, the main control unit (12) generates an authentication completion signal, generates a home event message according to an identity information of the mobile device (20) that has passed the authentication procedure, and sends the home event message to the at least one event execution unit;
wherein when the at least one event execution unit (11) receives the home event message, the event execution unit (11) determines whether to perform a home event according to the home event message; and
if the mobile device (20) has not passed the authentication procedure, the main control unit (12) generates an authentication failure signal, generates a leave event message according to an identity information of the mobile device (20) that has not passed the authentication procedure, and sends the leave event message to the at least one event execution unit;
wherein when the at least one event execution unit (11) receives the leave event message, the at least one event execution unit (11) determines whether to perform a leave event according to the leave event message.

2. The event management and control device (10) as claimed in claim 1, wherein the main control unit (12) has a home state record table that records a user state corresponding to the identity information of the mobile device (20); wherein
before the main control unit (12) sends the home event message to the at least one event execution unit, the main control unit (12) updates the user state corresponding to the identity information of the mobile device (20) that has passed the authentication procedure to a home state, and generates the home event message further according to the home state record table; and
before the main control unit (12) sends the leave event message to the at least one event execution unit, the main control unit (12) updates the user state corresponding to the identity information of the mobile device (20) that has not passed the authentication procedure to a leave state, and generates the leave event message further according to the home state record table.

3. The event management and control device (10) as claimed in claim 2, wherein
when the main control unit (12) determines whether the mobile device (20) has passed the authentication, the main control unit (12) determines whether the main control unit (12) is successfully connected with a registered mobile device (20); and
when the main control unit (12) is successfully connected with the registered mobile device (20), the main control unit (12) generates the authentication completion signal, updates the user state corresponding to the identity information of the successfully connected mobile device (20) in the home state record table to the home state, generates the home event message further according to the home state record table, and sends the home event message to the at least one event execution unit.

4. The event management and control device (10) as claimed in claim 3, wherein
when the main control unit (12) is not successfully connected with the registered mobile device (20), the main control unit (12) further determines whether to lose a connection with a mobile device (20) that has been successfully connected; and
when the main control unit (12) loses the connection with the mobile device (20) that has been successfully connected, the main control unit (12) generates the authentication failure signal, updates the user state corresponding to the identity information of the mobile device (20) that has lost the connection in the home state record table to the leave state, generates the leave event message further according to the home state record table, and sends the leave event message to the at least one event execution unit.

5. The event management and control device (10) as claimed in claim 2, wherein
when the main control unit (12) determines whether the mobile device (20) has passed the authentication procedure, the main control unit (12) first determines whether to scan a signal sent by the mobile device (20);
when the main control unit (12) has scanned the signal, the main control unit (12) further determines whether the identity information in the signal has been registered, and if the identity information in the signal has been registered, the main control unit (12) determines whether the user state corresponding to the identity information in the signal in the home state record table is the home state;
when the main control unit (12) determines the user state corresponding to the identity information in the signal in the home state record table is the home state, the main control unit (12) further updates a record time corresponding to the identity information in the signal in the home state record table to a current time; and
when the main control unit (12) determines the user state corresponding to the identity information in the signal in the home state record table is not the home state, the main control unit (12) generates the authentication completion signal, updates the record time corresponding to the identity information in the signal in the home state record table to the current time, updates the user state corresponding to the identity information in the signal in the home state record table to the home state, generates the home event message further according to the home state record table, and sends the home event message to the at least one event execution unit.

6. The event management and control device (10) as claimed in claim 5, wherein when the main control unit (12) has not scanned the signal sent by the mobile device (20), the main control unit (12) further determines whether a time difference between the recording time corresponding to the identity information in the home state record table and the current time exceeds a preset value; and
when the time difference exceeds the preset value, the main control unit (12) generates the authentication failure signal, updates the user state corresponding to the identity information to the leave state, generates the leave event message further according to the home state record table, and sends the leave event message to the at least one event execution unit.

7. The event management and control device (10) as claimed in claim 2, wherein
when the at least one event execution unit (11) receives the home event message, the at least one event execution unit (11) further receives an environmental parameter information, and executes corresponding functions according to the home event message and the environmental parameter information.

8. The event management and control device (10) as claimed in claim 2, wherein
when the at least one event execution unit (11) receives the leave event message, the at least one event execution unit (11) further receives an environmental parameter information, and executes corresponding functions according to the leave event message and the environmental parameter information.

9. The event management and control device (10) as claimed in claim 2, wherein when the at least one event execution unit (11) receives an environmental parameter information, the at least one event execution unit (11) determines whether to generate an environmental parameter event message according to the environmental parameter information;
when the environmental parameter event message is generated, the at least one event execution unit (11) reads the home state record table, and executes corresponding functions according to the user state recorded in the home state record table and the environmental parameter event message.

10. The event management and control device (10) as claimed in claim 2, wherein when the main control unit (12) receives a remote control signal, the main control unit (12) generates a remote event message according to the remote control signal and sends the remote event message to the at least one event execution unit; and
wherein when the at least one event execution unit (11) receives the remote event message, the at least one event execution unit (11) reads the home state record table, and executes corresponding functions according to the user state recorded in the home state record table and the remote event message.

11. The event management and control device (10) as claimed in claim 1, wherein the main control unit (12) of the event management and control device (10) is a smart phone.

12. An event management and control method, executed by a main control unit (12) of an event management and control device (10) and the event management and control device (10) further including at least one event execution unit, and **characterized in that** the event management and control method comprises the following steps of:
determining whether a mobile device (20) has passed an authentication procedure;
if determining that the mobile device (20) has passed the authentication procedure, generating an authentication completion signal, generating a home event message according to an identity information of the mobile device (20) that has passed the authentication procedure, and sending the home event message to the at least one event execution unit;
wherein when the home event message is received by the at least one event execution unit, the at least one event execution unit (11) determines whether to perform a home event according to the home event message; and
if determining that the mobile device (20) has not passed the authentication procedure, generating an authentication failure signal, generating a leave event message according to an identity information of the mobile device (20) that has not passed the authentication procedure, and sending a leave event message to the at least one event execution unit;
wherein when the leave event message is received by the at least one event execution unit, the at least one event execution unit (11) determines whether to perform a leave event according to the leave event message.

13. The event management and control method as claimed in claim 12, further comprising the following steps:
before sending the home event message, updating a user state corresponding to the identity information of the mobile device (20) that has passed the authentication procedure in a home state record table to a home state and generating the home event message further according to the home state record table;
before sending the leave event message to the at least one event execution unit, updating the user state corresponding to the identity information of the mobile device (20) that has not passed the authentication procedure in the home state record table to a leave state, and generating the leave event message further according to the home state record table.

14. The event management and control method as claimed in claim13, wherein the step of determining whether the mobile device (20) has passed the authentication procedure including the following steps:
determining whether the main control unit (12) is successfully connected with a registered mobile device (20);
when successfully connected with the registered mobile device (20), the main control unit (12) generates the authentication completion signal, updates the user state corresponding to the identity information of the successfully connected mobile device (20) in the home state record table to the home state, generates the home event message further according to the home state record table, and sends the home event message to the at least one event execution unit.

15. The event management and control method as claimed in claim 12, wherein the main control unit (12) of the event management and control device (10) is a smart phone.
